# EUROPÄISCHE PATENTANMELDUNG

(11) **EP 4 432 445 A1**
(43) Veröffentlichungstag der Anmeldung: **18.09.2024**
(21) Anmeldenummer: 23161930.5
(22) Anmeldetag: 14.03.2023
(51) Int. Cl.: H01M 50/342

(54) **VEREINFACHTE MONTAGE EINER BERSTMEMBRAN DURCH VERSTÄRKUNG**

(71) Anmelder: Cellforce Group GmbH, 72072 Tübingen (DE)
(72) Erfinder: Gräf, Jürgen, 72072 Tübingen (DE)

(57) **Zusammenfassung**

Die Erfindung betrifft eine Membrananordnung, aufweisend eine Berstmembran und aufweisend mindestens einen Verstärkungsrahmen, wobei der Verstärkungsrahmen mit der Berstmembran verbunden ist, wobei der mit der Berstmembran verbundene Verstärkungsrahmen dazu eingerichtet ist, innenseitig in ein Zellgehäuse hineingesetzt und außenseitig durch ein thermisches Fügeverfahren mit dem Zellgehäuse verbunden zu werden. Des Weiteren betrifft die Erfindung ein Verfahren zum Verbinden einer Berstmembran mit einem Batteriezellengehäuse sowie eine Batteriezelle mit einer Membrananordnung.

## Beschreibung

Die Erfindung betrifft eine Membrananordnung, aufweisend eine Berstmembran und aufweisend mindestens einen Verstärkungsrahmen. Des Weiteren betrifft die Erfindung ein Verfahren zum Verbinden einer Berstmembran mit einem Zellgehäuse einer Batteriezelle sowie eine Batteriezelle mit einer Membrananordnung.

Elektrochemische Speicher, wie beispielsweise Lithium-Ionen-Batterien, können in bestimmten Situationen gasförmige Bestandteile freisetzen und somit einen Überdruck im Zellgehäuse aufbauen. Innerhalb eines Batteriezellengehäuses bzw. Zellgehäuses kann ein zu hoher Druck in einem Explosionsrisiko resultieren. Es sind bereits Batteriezellen mit integrierten Sollbruchstellen bekannt. Beispielsweise können Sollbruchstellen in Form von Stanzungen in Wandungen von Batteriezellengehäusen eingebracht werden, um einen risikobehafteten Überdruck zu vermeiden.

Weiterhin sind bereits Berstmembranen bekannt, welche außenseitig mit einem Zellgehäusedeckel einer Batteriezelle verbunden werden. Problematisch ist bei einem außenseitigen Verbinden von Berstmembranen, insbesondere durch Schweißen, ist jedoch die Notwendigkeit einer bestimmten Materialstärke, um ein prozesssicheres Verbinden der Berstmembran mit dem entsprechenden Abschnitt der Batteriezelle zu ermöglichen. Aus diesem Grund werden Berstmembranen überwiegend in einem Zelldeckel mit einer ausreichenden Materialstärke angeordnet, um dieses Problem zu umgehen. Der Zelldeckel bildet üblicherweise einen höchsten Punkt der Batteriezelle und weist zusätzlich elektrische Anschlüsse auf. Je nach Anordnung und Ausrichtung der Zellstapel können entstehende Gase jedoch nur unzureichend oder nicht vollständig über den Zelldeckel abgeführt werden. Darüber hinaus können die elektrischen Anschlüsse ein Ausbilden eines Gaskanals zum Abführen von Gasen aus den Batteriezellen beeinträchtigen. Insbesondere kann eine in einen Zelldeckel eingebrachte Berstmembran nur mit einem erhöhten Aufwand gasdicht mit externen Kanälen gekoppelt werden, um ein kontrolliertes Ableiten von gasförmigen Bestandteilen aus einem Batteriesystem mit einer Vielzahl von Batteriezellen zu ermöglichen.

Die vorliegende Erfindung hat daher die Aufgabe, eine Membrananordnung und ein Verfahren zum Verbinden einer Berstmembran zu schaffen, welche ein technisch einfaches Positionieren der Berstmembran in einem bodenseitigen Bereich eines, insbesondere extrudierten oder gezogenen, Zellgehäuses ermöglichen. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Membrananordnung bereitgestellt. Die Membrananordnung weist eine Berstmembran und mindestens einen Verstärkungsrahmen auf, welcher mit der Berstmembran verbunden ist. Erfindungsgemäß ist der mit der Berstmembran verbundene Verstärkungsrahmen dazu eingerichtet, innenseitig in ein Batteriezellengehäuse bzw. Zellgehäuse hineingesetzt und außenseitig durch ein thermisches Fügeverfahren mit dem Zellgehäuse verbunden zu werden.

Nach einem weiteren Aspekt der Erfindung wird eine Batteriezelle bereitgestellt. Die Batteriezelle weist ein Zellgehäuse mit mindestens einem Zellstapel auf, welcher in einem Innenvolumen des Zellgehäuses angeordnet ist. Weiterhin weist die Batteriezelle mindestens eine erfindungsgemäße Membrananordnung auf. Vorteilhafterweise ist die Membrananordnung in einem bodenseitigen Bereich des Zellgehäuses angeordnet.

Hierdurch kann in zwei Schritten ein Verbinden von Berstmembranen mit besonders dünnwandigen Batteriezellengehäusen realisiert werden. Diese Maßnahme ermöglicht auch die Anordnung der Berstmembran in einem beliebigen Bereich des Zellgehäuses, insbesondere in einem Bodenbereich der Batteriezelle. In einem ersten Schritt wird die Berstmembran mit dem Verstärkungsrahmen verbunden. Dieser Schritt kann mit Hilfe einer reibschlüssigen und/oder stoffschlüssigen und/oder formschlüssigen Verbindung erfolgen. Beispielsweise kann die Berstmembran mit dem Verstärkungsrahmen verschweißt werden. Die resultierende Anordnung kann anschließend in eine hierfür vorgesehene Öffnung eingesetzt oder an einer derartigen Öffnung im Zellgehäuse positioniert werden. Die durch den Verstärkungsrahmen ausgebildete zusätzliche Materialstärke kann anschließend dazu genutzt werden, die Berstmembran in einem zweiten Schritt mit dem Zellgehäuse zu verbinden.

Dabei kann die Berstmembran über den Verstärkungsrahmen mit einer Wandung des Zellgehäuses verschweißt werden. Die zusätzliche Materialstärke des Verstärkungsrahmens ermöglicht eine prozesssichere Verbindung von beliebigen Berstmembranen, wodurch ein gesondertes Anfertigen von Berstmembranen im Rahmen einer Batteriezellenherstellung entfallen kann.

Durch die Verwendung des Verstärkungsrahmens kann eine Fügestelle, wie beispielsweise eine Schweißnaht, in einen Bereich des Zellgehäuses versetzt werden, welcher keine weitere Funktion erfüllt. Somit können beispielsweise Dichtungsflächen oder äußere Flächen des Zellgehäuses zum Aufnehmen von Dichtungen frei von Fügestellen oder Schweißnähten gehalten werden, um eine besonders optimale Dichtwirkung zu erzielen.

Bei einem weiteren Ausführungsbeispiel ist die Berstmembran plattenförmig ausgestaltet. Vorteilhafterweise liegt die Berstmembran randseitig auf dem Verstärkungsrahmen auf oder ist in eine Ausnehmung des Verstärkungsrahmens hineingelegt und mit dem Verstärkungsrahmen verbunden. Durch diese Maßnahme kann die Berstmembran besonders vielseitig mit dem Verstärkungsrahmen verbunden werden.

Zum Verbinden der Berstmembran mit dem Verstärkungsrahmen können Fügeverfahren, wie beispielsweise Laserschweißen, Ultraschallschweißen, Löten und dergleichen eingesetzt werden. Vorteilhafterweise kann mindestens eine erste Fügeverbindung eingebracht werden, welche die Berstmembran mit dem Verstärkungsrahmen stoffschlüssig verbindet. Eine derartige erste Fügeverbindung kann beispielsweise in Form einer umlaufenden Schweißnaht ausgebildet sein.

Die Membrananordnung kann anschließend mit Hilfe von mindestens einer zweiten Fügeverbindung mit einem Abschnitt oder einer Wand eines Zellgehäuses verbunden werden.

Die erste Fügeverbindung kann hierbei örtlich zumindest bereichsweise zu der zweiten Fügeverbindung versetzt angeordnet sein. Hierdurch können die Öffnung des Zellgehäuses und die Berstmembran unterschiedliche Größen aufweisen, wodurch die Auswahl von nutzbaren Berstmembranen vergrößert wird.

Die Berstmembran kann mechanisch besonders optimal gestützt werden, wenn der Verstärkungsrahmen als ein umlaufender Verstärkungsrahmen ausgestaltet ist. Vorteilhafterweise ist der Verstärkungsrahmen entlang eines gesamten Umfangs mit der Berstmembran stoffschlüssig verbunden. Hierdurch kann eine fluiddichte Verbindung zwischen der Berstmembran und dem Verstärkungsrahmen gewährleistet werden.

Nach einer weiteren Ausführungsform weist der Verstärkungsrahmen mindestens einen Positionierzapfen auf. Der mit der Berstmembran verbundene Verstärkungsrahmen ist mittels des mindestens einen Positionierzapfens an einer Öffnung des Zellgehäuses ausrichtbar. Vorteilhafterweise ragt der mindestens eine Positionierzapfen zumindest bereichsweise in die Öffnung des Zellgehäuses hinein. Der Einsatz des Positionierzapfens ermöglicht eine einfachere Montage der Membrananordnung und eine präzise Ausrichtung der Membrananordnung gegenüber der Öffnung des Zellgehäuses.

Die Ausrichtung der Membrananordnung kann besonders genau erfolgen, wenn der Positionierzapfen als ein umlaufender Positionierzapfen ausgestaltet ist. Der umlaufende Positionierzapfen ist weiterhin derart geformt, dass dieser in die Öffnung hineingesetzt parallel zu einer randseitigen Kontur der Öffnung des Zellgehäuses verläuft. Durch diese Maßnahme kann die mindestens eine zweite Fügeverbindung entlang der Kontur der Öffnung des Zellgehäuses verlaufen und somit die Kontur der Öffnung mit dem Positionierzapfen stoffschlüssig verbunden. Hierdurch kann der Verstärkungsrahmen besonders prozesssicher mit dem Zellgehäuse verbunden werden. Dabei ermöglicht der parallele Verlauf des Positionierzapfens zur Kontur der Öffnung einen besonders optimalen Werkzeugzugang zum Einbringen der zweiten Fügeverbindung.

Die Membrananordnung kann strukturell zusätzlich versteift bzw. verstärkt werden, wenn an dem Verstärkungsrahmen mindestens ein Verstärkungskäfig angeordnet ist.

Nach einer weiteren Ausführungsform ist der mindestens ein Verstärkungskäfig innenseitig des Zellgehäuses oder außenseitig des Zellgehäuses an dem Verstärkungsrahmen angeordnet. Die Anordnung des Verstärkungskäfigs an einer Innenseite des Zellgehäuses kann ein Blockieren eines Bereichs vor der Berstmembran effizient verhindern, sodass der Schutzmechanismus der Berstmembran stets gewährleistet werden kann. Eine Anordnung des Verstärkungskäfigs an einer Außenseite des Zellgehäuses kann analog dazu eingesetzt werden, einen Bereich außerhalb des Zellgehäuses freizuhalten, um ein zuverlässiges Entweichen von gasförmigen Bestandteilen der Batteriezelle im Falle eines Überdrucks über die Berstmembran zu ermöglichen.

Der mindestens eine Verstärkungskäfig kann besonders effizient mit dem Verstärkungsrahmen verbunden werden, wenn der mit der Berstmembran verbundene Verstärkungsrahmen dazu eingerichtet ist, außenseitig direkt oder indirekt über den mindestens einen Verstärkungskäfig durch ein thermisches Fügeverfahren mit dem Zellgehäuse verbunden zu werden. Hierdurch kann durch Bereiche des Verstärkungskäfigs hindurch eine Fügeverbindung, wie beispielsweise Schweißnaht, eingebracht werden, welche gleichzeitig auch den Verstärkungsrahmen mit dem Zellgehäuse verbindet.

Gemäß einem weiteren Ausführungsbeispiel weist der Verstärkungsrahmen mindestens eine randseitige Schräge und/oder eine Strömungsabrisskante auf. Eine randseitige Schräge kann eine besonders optimale Aerodynamik einer Strömung ermöglichen, welche durch eine aktivierte bzw. gebrochene Berstmembran hinausströmt. Die Verwendung einer Strömungsabrisskante kann dazu eingesetzt werden, die bei einem Überdruck resultierende Strömung aus der Batteriezelle von einem laminaren Strömungszustand in einen turbulenten Strömungszustand zu überführen, wodurch die Strömungsgeschwindigkeit erhöht und der Überdruck schneller abgebaut werden kann.

Nach einem weiteren Aspekt der Erfindung wird ein Verfahren zum Verbinden einer Berstmembran mit einem Batteriezellengehäuse bereitgestellt. In einem Schritt wird die Berstmembran relativ zu einem Verstärkungsrahmen ausgerichtet und mit dem Verstärkungsrahmen stoffschlüssig verbunden. Der mit der Berstmembran verbundene Verstärkungsrahmen wird in einem weiteren Schritt innenseitig in einem Innenvolumen eines Zellgehäuses an einer Öffnung des Zellgehäuses positioniert. Anschließend wird der Verstärkungsrahmen durch ein Anwenden eines thermischen Fügeverfahrens auf einer Außenseite des Zellgehäuses im Bereich der Öffnung stoffschlüssig mit dem Zellgehäuse verbunden.

Durch das erfindungsgemäße Verfahren kann während dem Anwenden des Fügeverfahrens ein optimaler Werkzeugzugang zu den entsprechenden Fügeverbindungen sichergestellt werden. Insbesondere wird durch das Verfahren ein Einbringen einer Schweißnaht von einer Innenseite des Zellgehäuses mit einer resultierenden Notwendigkeit von besonders kleinen oder schmalen Werkzeugen vermieden. Das Verfahren ermöglicht ein Fügen der jeweiligen Komponenten durch Einbringen von Fügeverbindungen an äußeren Oberflächen, wie beispielsweise einer nach Außen gerichteten Kontur der Öffnung des Zellgehäuses.

Nach einer Ausführungsform wird der Verstärkungsrahmen durch ein als Laserschweißen oder als ein Löten oder als ein Kontaktschweißen oder als ein thermisch aktivierbares Kleben ausgestaltetes thermisches Fügeverfahren mit dem Zellgehäuse stoffschlüssig verbunden. Hierdurch kann das Einbringen von ersten Fügeverbindungen und/oder zweiten Fügeverbindungen flexibel mit Hilfe von unterschiedlichen Werkzeugen bzw. Fügeverfahren realisiert werden.

Die Membrananordnung kann technisch besonders einfach in das Zellgehäuse eingebracht werden, wenn der mit der Berstmembran verbundene Verstärkungsrahmen innenseitig in einem Innenvolumen des Zellgehäuses mit Hilfe von mindestens einem Positionierzapfen an einer Öffnung des Zellgehäuses positioniert wird. Insbesondere kann die Membrananordnung in die Öffnung des Zellgehäuses hineinsetzt und optional mit der Öffnung verrastet werden, wenn der Positionierzapfen zu einer Randkontur der Öffnung des Zellgehäuses benachbart angeordnet wird. Somit kann ein nachträgliches Verrutschen der Membrananordnung vermieden werden, wenn diese mit dem Zellgehäuse stoffschlüssig verbunden wird.

Gemäß einem weiteren Ausführungsbeispiel wird der Verstärkungsrahmen durch Einbringen von mindestens einer Schweißnaht in einem Bereich zwischen dem mindestens einen Positionierzapfen und der Randkontur der Öffnung des Zellgehäuses mit dem Zellgehäuse verbunden. Durch diese Maßnahme kann der Bereich zwischen der Randkontur der Öffnung und dem Positionierzapfen durch Einbringen einer Schweißnaht zuverlässig verbunden werden. Bei einer derartigen Verbindung sind die Erfordernisse an die Genauigkeit der Werkzeugführung relativ gering, sodass eine derartige Verbindung besonders schnell und technisch einfach umsetzbar ist.

Nachstehend werden mehrere Ausführungsbeispiele der Erfindung anhand der Zeichnungen näher erläutert. Es zeigen:
Fig. 1 eine schematische Schnittdarstellung einer Membrananordnung gemäß einer Ausführungsform der Erfindung,
Fig. 2 eine schematische Schnittdarstellung eines bodenseitigen Bereichs eines Zellgehäuses einer Batteriezelle mit einer eingesetzten Membrananordnung aus Fig. 1,
Fig. 3 eine schematische Schnittdarstellung eines bodenseitigen Bereichs eines Zellgehäuses mit einer Membrananordnung gemäß einer zweiten Ausführungsform der Erfindung,
Fig. 4 eine schematische Schnittdarstellung eines bodenseitigen Bereichs eines Zellgehäuses mit einer Membrananordnung gemäß einer dritten Ausführungsform der Erfindung,
Fig. 5 eine schematische Schnittdarstellung eines bodenseitigen Bereichs eines Zellgehäuses mit einer Membrananordnung gemäß einer vierten Ausführungsform der Erfindung,
Fig. 6 eine schematische Schnittdarstellung eines bodenseitigen Bereichs eines Zellgehäuses mit einer Membrananordnung gemäß einer fünften Ausführungsform der Erfindung, und
Fig. 7 eine schematische Schnittdarstellung eines bodenseitigen Bereichs eines Zellgehäuses mit einer Membrananordnung gemäß einer sechsten Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

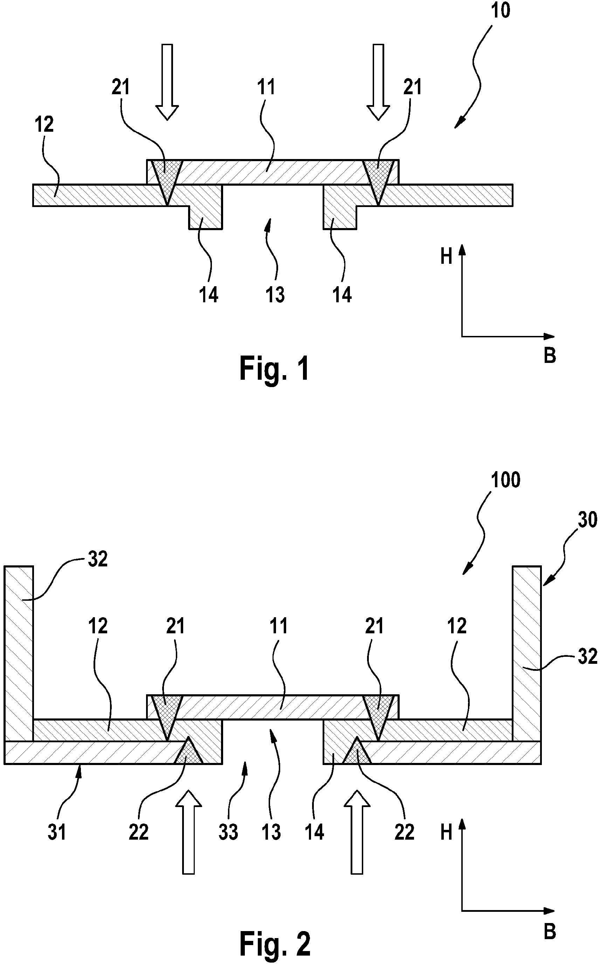

Die Fig. 1 zeigt eine schematische Schnittdarstellung einer Membrananordnung 10 gemäß einer Ausführungsform der Erfindung. Die Membrananordnung 10 weist im dargestellten Ausführungsbeispiel eine Berstmembran 11 und einen Verstärkungsrahmen 12 auf. Dabei dient die Schnittdarstellung zum Veranschaulichen einer Ausdehnung der Membrananordnung 10 entlang einer Breitenrichtung B und einer Höhenrichtung H.

Der Verstärkungsrahmen 12 ist mit der Berstmembran 11 stoffschlüssig verbunden. Hierfür wurde eine erste Fügeverbindung 21 durch die Berstmembran 11 hindurch eingebracht, durch welches eine stoffschlüssige Fügeverbindung zwischen dem Verstärkungsrahmen 12 und der Berstmembran 11 entsteht. Die Pfeile veranschaulichen eine Richtung einer Einwirkung durch ein nicht dargestelltes Werkzeug, wie beispielsweise eines Laserschweiß-Werkzeugs. Die erste Fügeverbindung 21 kann beispielsweise als eine umlaufende Schweißnaht ausgestaltet sein.

Der Verstärkungsrahmen 12 ist als ein umlaufender Rahmen ausgestaltet und weist eine mittig angeordnete Ausnehmung 13 auf, sodass die Berstmembran 11 bei einer Überbeanspruchung durch einen Überdruck in die Ausnehmung 13 hinein brechen bzw. aufklappen kann.

Der mit der Berstmembran 11 verbundene Verstärkungsrahmen 12 ist dazu eingerichtet, innenseitig in ein Batteriezellengehäuse bzw. Zellgehäuse 30 hineingesetzt und außenseitig durch ein thermisches Fügeverfahren mit dem Zellgehäuse 30 (siehe Fig. 2) verbunden zu werden.

Der Verstärkungsrahmen 12 weist beispielhaft einen Positionierzapfen 14 auf. Der mit der Berstmembran 11 verbundene Verstärkungsrahmen 12 ist mittels des Positionierzapfens 14 an einer in Fig. 2 gezeigten Öffnung 33 des Zellgehäuses 30 ausrichtbar. Dabei ragt der Positionierzapfen 14 in die Öffnung 33 des Zellgehäuses 30 hinein.

Der Positionierzapfen 14 ist umlaufend bzw. ringförmig geformt und umgibt umfangsseitig die Ausnehmung 13 des Verstärkungsrahmens 12. Dabei ist der Positionierzapfen 14 derart geformt, dass dieser in die Öffnung 33 des Zellgehäuses 30 hineingesetzt parallel zu einer randseitigen Kontur der Öffnung 33 des Zellgehäuses 30 verläuft bzw. an dieser Kontur der Öffnung 33 entlang verläuft.

In der Fig. 2 ist eine schematische Schnittdarstellung eines bodenseitigen Bereichs 31 bzw. Bodens eines Zellgehäuses 30 einer Batteriezelle 100 mit einer eingesetzten Membrananordnung 10 aus Fig. 1 gezeigt. Der Übersicht halber sind die weiteren Komponenten der Batteriezelle 100, wie beispielsweise Zellstapel, Zellverbinder, Batteriepole, Elektrolyt und dergleichen nicht dargestellt.

Die Membrananordnung 10 ist derart im bodenseitigen Bereich 31 angeordnet, dass der Positionierzapfen 14, welcher als ein Positionierring geformt ist, in die Öffnung 33 formschlüssig hineinragt. Vorzugsweise liegt hierbei der gesamte Verstärkungsrahmen 12 flach und bündig auf einer Innenseite des bodenseitigen Bereichs 31 auf.

Die Öffnung 33 kann hierbei einen runden, einen ovalen, einen rechteckigen und dergleichen Querschnitt aufweisen. Die Membrananordnung 10 verstärkt hierbei den bodenseitigen Bereich 31 des Zellgehäuses 30. Dabei ist die Membrananordnung 10 durch eine umlaufende zweite Fügeverbindung 22 mit dem bodenseitigen Bereich 31 des Zellgehäuses 30 verbunden. Die zweite Fügeverbindung 22 ist beispielhaft als eine Schweißnaht ausgestaltet.

Die Pfeile in Fig. 2 veranschaulichen eine Einwirkung eines Fügewerkzeugs, wie beispielsweise eines Laserschweiß-Werkzeugs, von einer Außenseite auf einen umlaufenden Spalt zwischen dem Positionierzapfen 14 und der Kontur der Öffnung 33 des Zellgehäuses 30.

Im dargestellten Ausführungsbeispiel ragt der Verstärkungsrahmen 12 bis zu seitlichen Wänden 32 des Zellgehäuses 30 hinaus und versteift somit das Zellgehäuse 30 bodenseitig.

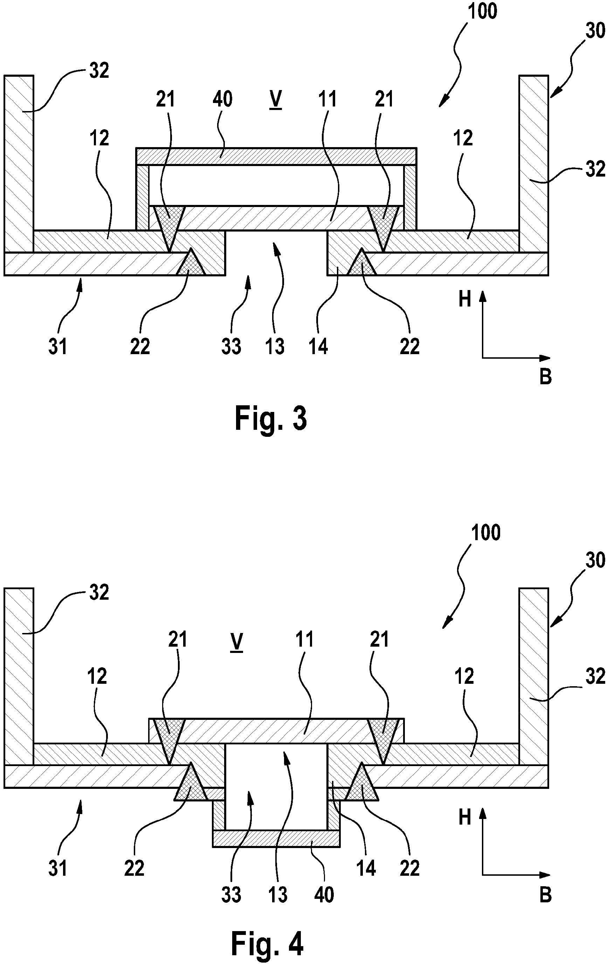

Die Fig. 3 veranschaulicht in einer schematischen Schnittdarstellung einen bodenseitigen Bereichs 31 eines Zellgehäuses 30 mit einer Membrananordnung 10 gemäß einer zweiten Ausführungsform der Erfindung. Im Unterschied zum in Fig. 2 gezeigten Ausführungsbeispiel weist die Membrananordnung 10 hier eine zusätzliche strukturelle Versteifung in Form eines Verstärkungskäfigs 40.

Der Verstärkungskäfig 40 umgreift die Berstmembran 11 außenseitig und ermöglicht einen freien Zulauf zur Berstmembran 11 im Innenvolumen V des Zellgehäuses 30.

In einer alternativen oder zusätzlichen Ausgestaltung, welche in Fig. 4 illustriert ist, weist die Membrananordnung 10 einen Verstärkungskäfig 40 auf, welcher außenseitig mit dem Verstärkungsrahmen 12 verbunden ist. Somit wird ein Bereich außerhalb des Innenvolumens V des Zellgehäuses 30 durch den Verstärkungskäfig 40 freigehalten.

Weiterhin ermöglicht der Verstärkungskäfig 40 eine zusätzliche Verstärkung der Berstmembran 11 und des Verstärkungsrahmens 12.

In der Fig. 4 ist weiterhin der mit der Berstmembran 11 verbundene Verstärkungsrahmen 12 außenseitig direkt über den Verstärkungskäfig 40 hindurch mit dem Zellgehäuse 30 verbunden. Hierdurch kann durch Bereiche bzw. Abschnitte des Verstärkungskäfigs 40 hindurch eine zweite Fügeverbindung 22, wie beispielsweise Schweißnaht, eingebracht werden, welche gleichzeitig auch den Verstärkungsrahmen 40 zusätzlich zum Verstärkungsrahmen 12 mit dem Zellgehäuse 30 verbindet.

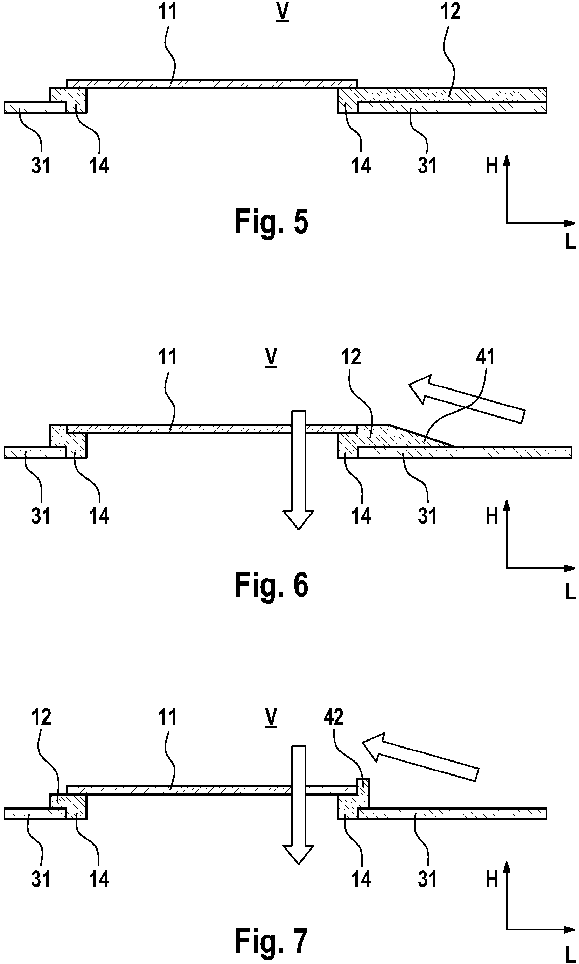

Die Fig. 5 zeigt eine schematische Schnittdarstellung eines bodenseitigen Bereichs 31 eines Zellgehäuses 30 mit einer Membrananordnung 10 gemäß einer vierten Ausführungsform der Erfindung. Im Unterschied zu den bereits beschriebenen Figuren ist hier eine Schnittdarstellung zum Veranschaulichen einer Ausdehnung der Membrananordnung 10 entlang einer Längsrichtung L gezeigt.

Zum Ermöglichen einer besonders effizienten Verstärkung bzw. Versteifung des bodenseitigen Bereichs 31, ragt der Verstärkungsrahmen 12 einseitig über die Öffnung 33 hinaus und erstreckt sich im Wesentlichen über den gesamten bodenseitigen Bereich 31 des Zellgehäuses 30 entlang der Erstreckung des Zellgehäuses 30 in Längsrichtung L.

Der Übersicht halber sind in der Fig. 5, Fig. 6 und Fig. 7 keine Fügeverbindungen 21, 22 gezeigt.

In Fig. 6 ist eine schematische Schnittdarstellung eines bodenseitigen Bereichs 31 eines Zellgehäuses 30 mit einer Membrananordnung 10 gemäß einer fünften Ausführungsform der Erfindung illustriert. Bei dieser Ausführungsform weist der Verstärkungsrahmen 12 mindestens eine randseitige Schräge 41 auf.

Eine derartige randseitige Schräge 41 kann die Aerodynamik einer Strömung verbessern, welche durch eine mittels Überdruck betätigte bzw. gebrochene Berstmembran 11 hinausströmt. Die Strömung kann gasförmige und flüssige Bestandteile des Elektrolyts aufweisen und ist durch die Pfeile veranschaulicht.

Gemäß einer sechsten Ausführungsform, welche in Fig. 7 gezeigt ist, wird eine weitere Membrananordnung 10 mit einem Verstärkungsrahmen 12 veranschaulicht. Dabei weist der Verstärkungsrahmen 12 eine Strömungsabrisskante 42 auf.

Die Strömungsabrisskante 42 steht im Wesentlichen senkrecht zum bodenseitigen Bereich 31 ab und ragt somit in das Innenvolumen V des Zellgehäuses 30 hinein. Je nach Ausgestaltung kann jeweils eine Strömungsabrisskante 42 in Längsrichtung L randseitig des Verstärkungsrahmens 12 angeordnet sein, um bei einer entstehenden Strömung einen Strömungsabriss mit einer resultierenden turbulenten Strömung zu erzwingen.

Die Strömung resultiert analog zu Fig. 6 aufgrund einer Betätigung bzw. eines Brechens der Berstmembran 11 durch Überschreiten eines vordefinierten Drucks im Innenvolumen V des Zellgehäuses 30. Die Strömung besteht somit aus Bestandteilen, die aus dem Zellgehäuse 30 entweichen und ist durch die Pfeile veranschaulicht.

## Patentansprüche

1. Membrananordnung (10), aufweisend eine Berstmembran (11) und aufweisend mindestens einen Verstärkungsrahmen (12), wobei der Verstärkungsrahmen (12) mit der Berstmembran (11) verbunden ist, **dadurch gekennzeichnet, dass** der mit der Berstmembran (11) verbundene Verstärkungsrahmen (12) dazu eingerichtet ist, innenseitig in ein Zellgehäuse (30) hineingesetzt und außenseitig durch ein thermisches Fügeverfahren mit dem Zellgehäuse (30) einer Batteriezelle (100) verbunden zu werden.

2. Membrananordnung nach Anspruch 1, wobei die Berstmembran (11) plattenförmig ausgestaltet ist, wobei die Berstmembran (11) randseitig auf dem Verstärkungsrahmen (12) aufliegend oder in eine Ausnehmung des Verstärkungsrahmens (12) hineingelegt und mit dem Verstärkungsrahmen (12) verbunden ist.

3. Membrananordnung nach Anspruch 1 oder 2, wobei der Verstärkungsrahmen (12) als ein umlaufender Verstärkungsrahmen (12) ausgestaltet ist, wobei der Verstärkungsrahmen (12) mit der Berstmembran (11) entlang eines gesamten Umfangs stoffschlüssig verbunden ist.

4. Membrananordnung nach einem der Ansprüche 1 bis 3, wobei der Verstärkungsrahmen (12) mindestens einen Positionierzapfen (14) aufweist, wobei der mit der Berstmembran (11) verbundene Verstärkungsrahmen (12) mittels des mindestens einen Positionierzapfens (14) an einer Öffnung (33) des Zellgehäuses (30) ausrichtbar ist, wobei der mindestens eine Positionierzapfen (14) zumindest bereichsweise in die Öffnung (33) des Zellgehäuses (30) hineinragt.

5. Membrananordnung nach Anspruch 4, wobei der Positionierzapfen (14) als ein umlaufender Positionierzapfen (14) ausgestaltet ist, wobei der umlaufende Positionierzapfen (14) derart geformt ist, dass dieser in die Öffnung (33) hineingesetzt parallel zu einer randseitigen Kontur der Öffnung (33) des Zellgehäuses (30) verläuft.

6. Membrananordnung nach einem der Ansprüche 1 bis 5, wobei an dem Verstärkungsrahmen (12) mindestens ein Verstärkungskäfig (40) angeordnet ist.

7. Membrananordnung nach Anspruch 6, wobei der mindestens eine Verstärkungskäfig (40) innenseitig des Zellgehäuses (30) oder außenseitig des Zellgehäuses (30) an dem Verstärkungsrahmen (12) angeordnet ist.

8. Membrananordnung nach Anspruch 6 oder 7, wobei der mit der Berstmembran (11) verbundene Verstärkungsrahmen (12) dazu eingerichtet ist, außenseitig direkt oder indirekt über den mindestens einen Verstärkungskäfig (40) durch ein thermisches Fügeverfahren mit dem Zellgehäuse (30) verbunden zu werden.

9. Membrananordnung nach einem der Ansprüche 1 bis 8, wobei der Verstärkungsrahmen (12) mindestens eine randseitige Schräge (41) und/oder eine Strömungsabrisskante (42) aufweist.

10. Verfahren zum Verbinden einer Berstmembran (11) mit einem Zellgehäuse (30), insbesondere einem Zellgehäuse (30) einer Batteriezelle (100), wobei die Berstmembran (11) relativ zu einem Verstärkungsrahmen (12) ausgerichtet und mit dem Verstärkungsrahmen (12) stoffschlüssig verbunden wird, der mit der Berstmembran (11) verbundene Verstärkungsrahmen (12) innenseitig in einem Innenvolumen (V) des Zellgehäuses (30) an einer Öffnung (33) des Zellgehäuses (30) positioniert wird, und der Verstärkungsrahmen (12) durch ein Anwenden eines thermischen Fügeverfahrens auf einer Außenseite des Zellgehäuses (30) im Bereich der Öffnung (33) stoffschlüssig mit dem Zellgehäuse (30) verbunden wird.

11. Verfahren nach Anspruch 10, wobei der Verstärkungsrahmen (12) durch ein als Laserschweißen oder als ein Löten oder als ein Kontaktschweißen oder als ein thermisch aktivierbares Kleben ausgestaltetes thermisches Fügeverfahren mit dem Zellgehäuse (30) stoffschlüssig verbunden wird.

12. Verfahren nach Anspruch 10 oder 11, wobei der mit der Berstmembran (11) verbundene Verstärkungsrahmen (12) innenseitig in einem Innenvolumen (V) des Zellgehäuses (30) mit Hilfe von mindestens einem Positionierzapfen (14) an einer Öffnung (33) des Zellgehäuses (30) positioniert wird, wobei der Positionierzapfen (14) zu einer Randkontur der Öffnung (33) des Zellgehäuses (30) benachbart angeordnet wird.

13. Verfahren nach Anspruch 12, wobei der Verstärkungsrahmen (12) durch Einbringen von mindestens einer Schweißnaht in einem Bereich zwischen dem mindestens einen Positionierzapfen (14) und der Randkontur der Öffnung (33) des Zellgehäuses (30) mit dem Zellgehäuse (30) verbunden wird.

14. Batteriezelle (100), aufweisend ein Zellgehäuse (30) mit mindestens einem Zellstapel, welcher in einem Innenvolumen (V) des Zellgehäuses (30) angeordnet ist und aufweisend eine Membrananordnung (10) gemäß einem der Ansprüche 1 bis 9, wobei die Membrananordnung (10) in einem bodenseitigen Bereich (31) des Zellgehäuses (30) angeordnet ist.
